# EUROPÄISCHE PATENTSCHRIFT

(11) **EP 2 544 875 B1**
(45) Veröffentlichungstag und Bekanntmachung des Hinweises auf die Patenterteilung: **02.04.2014**
(21) Anmeldenummer: 11714682.9
(22) Anmeldetag: 18.02.2011
(51) Int. Cl.: B29C 49/36, B29C 49/78, B29C 49/06, B29C 49/12, B29C 49/64

(54) **VERFAHREN UND VORRICHTUNG ZUR BLASFORMUNG VON BEHÄLTERN**
METHOD AND DEVICE FOR BLOW -FORMING CONTAINERS
PROCÉDÉ ET DISPOSITIF POUR LE MOULAGE PAR SOUFFLAGE DE CONTENANTS

(30) Priorität: 08.03.2010 DE 102010011244
(43) Veröffentlichungstag der Anmeldung: 16.01.2013
(73) Patentinhaber: KHS Corpoplast GmbH, 22145 Hamburg (DE)
(72) Erfinder: KLATT, Dieter, 22147 Hamburg (DE)
(74) Vertreter: Hausfeld, Norbert
(86) Internationale Anmeldenummer: PCT/DE2011/000165
(87) Internationale Veröffentlichungsnummer: WO 2011/110149

(56) Entgegenhaltungen:
- WO-A1-96/25285
- DE-U1-202005 020 967
- US-B1- 6 709 611
- DATABASE WPI Week 199351 Thomson Scientific, London, GB; AN 1993-410497 XP002659779, -& JP 5 309726 A (ASAHI CHEM IND CO LTD) 22. November 1993 (1993-11-22)

## Beschreibung

Die Erfindung betrifft ein Verfahren zur Blasformung von Behältern, bei dem ein Vorformling nach einer thermischen Konditionierung innerhalb einer Blasform einer Blasmaschine durch Blasdruckeinwirkung in den Behälter umgeformt wird sowie bei dem ein Blasgas von einer Versorgungseinrichtung bereitgestellt wird und mindestens ein Teil des Blasgases nach der Behälterformung einer Wiederverwendung zugeführt wird.

Die Erfindung betrifft darüber hinaus eine Vorrichtung zur Blasformung von Behältern, die mindestens eine Blasstation mit einer Blasform aufweist, sowie bei der die Blasstation mit einer pneumatischen versorgungseinrichtung verbunden ist, die eine Einrichtung zur wiederverwendung von Blasgas aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für die Herstellung der blasgeformten Behälter werden große Mengen an Druckluft benötigt, die in der Regel von Kompressoren bereitgestellt wird. Sowohl die Anschaffung entsprechend großer Kompressoren als auch der Energiebedarf der Kompressoren verursachen erhebliche Kosten. Es sind deshalb bereits Maßnahmen bekannt geworden, verbrauchte Blasluft, die nach der Herstellung der Behälter aus diesen ausströmt, einer erneuten Verwendung zuzuführen.

In der DE 10 2004 044 260 wird beispielsweise bereits die Wiederverwendung verbrauchter Blasluft für unterschiedliche Zwecke beschrieben. Gemäß einer Variante erfolgt eine Wiederverwendung auf dem Blasrad als Druckluft für ein Vorblasen der Behälter. Da der Bedarf an derartiger Vorblasluft deutlich geringer ist als die Menge an verbrauchter Hochdruckblasluft, wird gemäß diesem Stand der Technik ein Teil der verbrauchten Blasluft vom rotierenden Blasrad zu einem stationären Anlagenteil zurückgeführt und kann dort entweder als vordruck für einen Kompressor verwendet werden, oder einem separaten Arbeitsluftsystem zugeführt werden. Die Rückführung der Blasluft vom rotierenden Blasrad erfordert jedoch einen erheblichen gerätetechnischen Aufwand, darüber hinaus entstehen deutliche Verluste hinsichtlich des Wirkungsgrades.

US 670961 offenbart ein ähnliches Verfahren und eine ähnliche Vorrichtung.

Aufgabe der vorliegenden Erfindung ist es daher, ein Verfahren der einleitend genannten Art zu verbessern, dass eine Wiederverwendung von Blasluft mit geringem gerätetechnischen Aufwand und hoher Effektivität unterstützt wird.

Diese Aufgabe wird erfindungsgemäß mit den Merkmale der unabhängigen Ansprüche gelöst.

Durch die Erhöhung des Druckes der verbrauchten Blasluft auf ein wieder höheres Druckniveau ist es möglich, eine Wiederverwendung der Blasluft ohne große Leitungslängen und somit ohne entsprechende verluste durchzuführen. Die gesamte Menge des zur Wiederverwendung vorgesehenen Blasgases kann auf das erforderliche Druckniveau transformiert werden und erneut als Blasgas eingesetzt werden.

Erfindungsgemäß kann somit das Ablassen der Druckluft aus den geblasenen Behältern weitgehend frei entsprechend den prozeßtechnischen Randbedingungen gewählt werden. Insbesondere kann hierbei eine Optimierung hinsichtlich der Rückführung einer möglichst großen Menge an Blasgas und einer möglichst kleinen Prozeßzeit erreicht werden.

Eine Wiederverwendung der Blasluft innerhalb des gesamten benötigten Druckbereiches kann dadurch erfolgen, daß der Druck auf einen maximalen Blasdruck erhöht wird.

Gemäß einer weiteren Ausführungsform ist auch daran gedacht, daß der Druck auf ein Druckniveau erhöht wird, daß zwischen dem Druck des rückgeführten Gases und dem maximalen Blasdruck liegt.

Eine mechanisch robuste sowie störungsresistente Ausführungsform wird dadurch bereitgestellt, daß die Drucktransformation unter Verwendung eines Druckwandlers durchgeführt wird, der zwei Kolben mit unterschiedlich großen Kolbenflächen aufweist.

Eine weitgehende Entkopplung der Blasstationen wird dadurch unterstützt, daß jeder Blasstation auf dem Blasrad ein separater Druckwandler zugeordnet wird.

Zur Bereitstellung einer vereinfachten Ausführungsform ist aber auch daran gedacht, daß mindestens zwei Blasstationen an einen gemeinsamen Druckwandler angeschlossen werden.

Bei den bekannten Varianten zur direkten pneumatischen Wiederverwendung der Druckluft besteht das wesentliche Problem darin, daß es nicht möglich ist, das ursprüngliche Druckniveau wieder zu erreichen. Die verbrauchte Blasluft kann deshalb nur in einem Arbeitsluftbereich oder als Vordruck bei der Durchführung des Blasvorganges verwendet werden. Der wesentliche Energieanteil bleibt jedoch ungenutzt. Die Transformation des Druckniveaus auf ein höheres Druckniveau ermöglicht es, unter Verwendung der im Druckgas gespeicherten Energie eine erneute Gaskompression auf grundsätzlich jedes beliebige vorgebbare Druckniveau vornehmen zu können und insbesondere hierdurch wieder den erforderlichen Hauptblasdruck bereitzustellen.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grund-sätzlichen Aufbaus einer Vorrichtung zur Blas-formung von Behältern,
- Fig. 4: eine modifizierte Heizstrecke mit vergrößerter Heizkapazität,
- Fig. 5: eine schematische Darstellung eines Druckwandlers zur Druckerhöhung
- Fig. 6: eine pneumatische Schaltung zur Verwendung des Druckwandlers gemäß Fig. 5 im Bereich der pneumatischen Komponenten auf einem Blasrad.

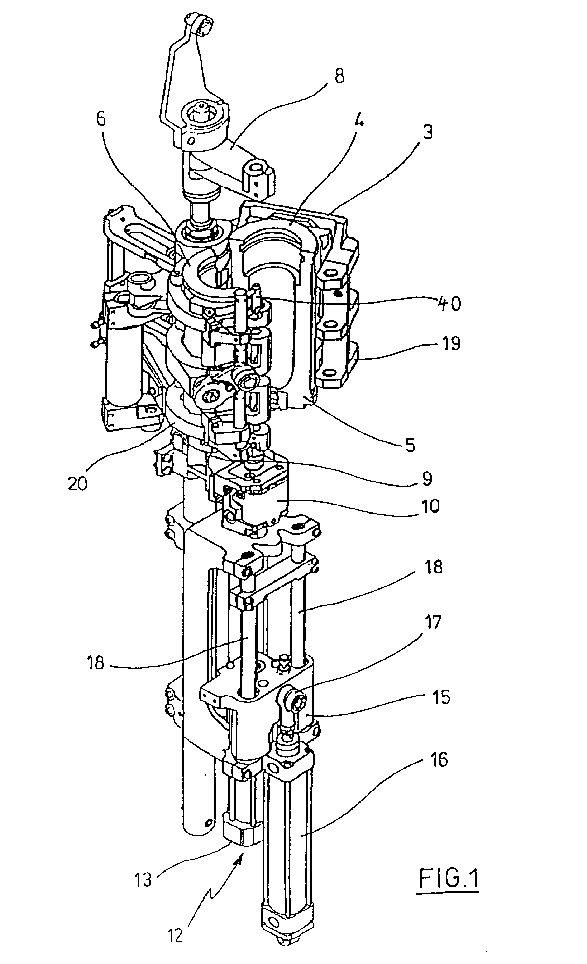

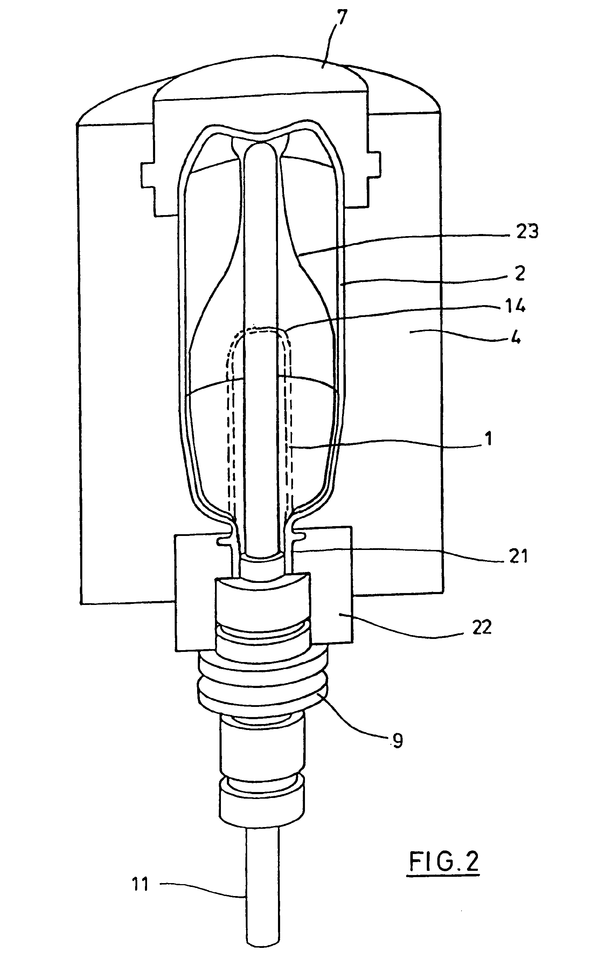

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durch-führung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

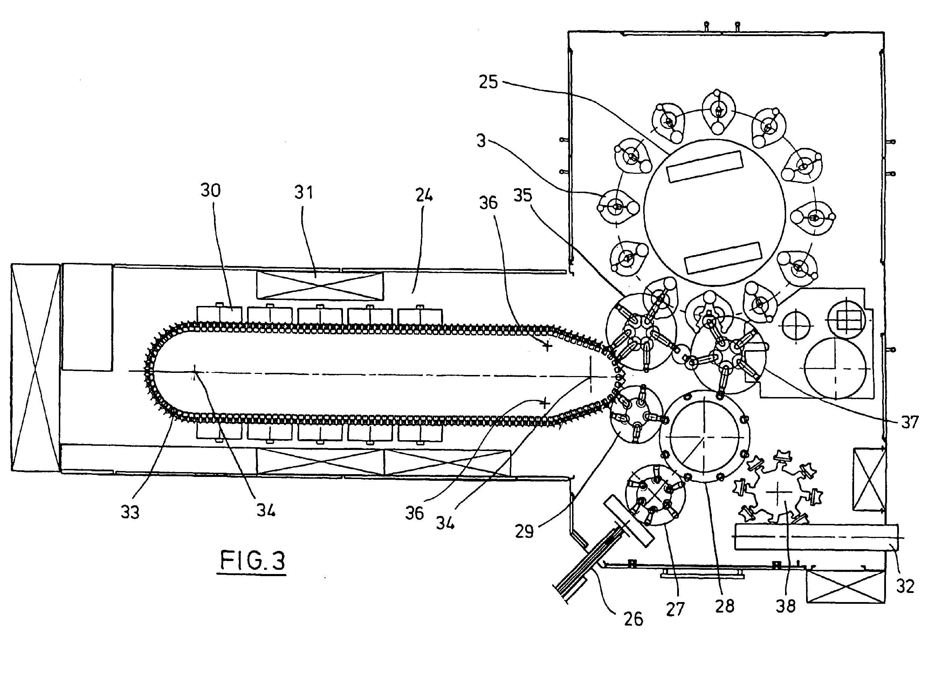

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformling (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

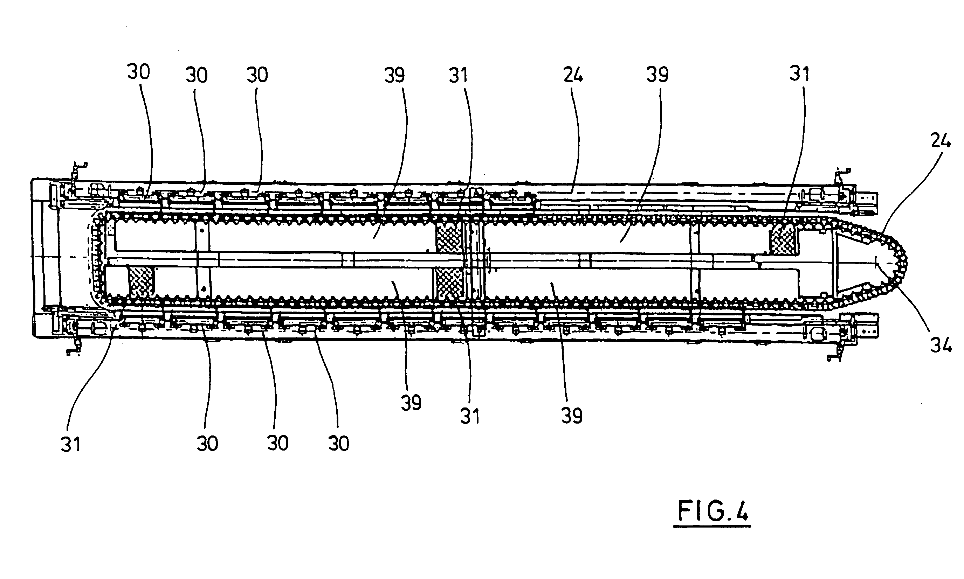

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

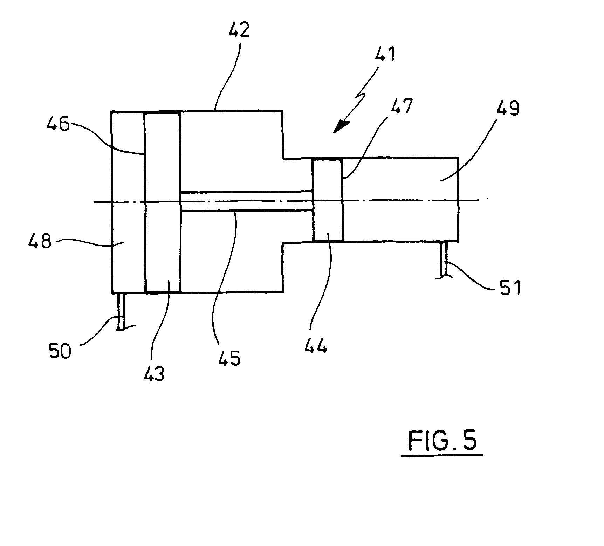

Fig. 5 zeigt in einer schematischen Darstellung einen Druckwandler (41). Der Druckwandler (41) weist ein Zylindergehäuse (42) auf, in dem zwei Kolben (43, 44) beweglich geführt sind. Die beiden Kolben (43, 44) sind von einer Kopplung (45) mechanisch miteinander verbunden. Der Kolben (43) weist eine größere Arbeitsfläche (46) auf als der Kolben (44). Die Arbeitsfläche (46) des Kolbens (43) ist einem Primärraum (48) des Zylindergehäuses (42) zugewandt angeordnet. Der Kolben (44) weist mit seiner Arbeitsfläche (47) in Richtung auf einen Sekundärraum (49) des Zylindergehäuses (42).

Der Primärraum (48) weist einen Einlaß (50) auf und der Sekundärraum (49) ist mit einem Auslaß (51) versehen. Bei einer Druckbeaufschlagung des Primärraumes (48) mit einem vorgegebenen Druck wird nur aufgrund der Größenrelation zwischen den Arbeitsflächen (46, 47) im Bereich des Sekundärraumes (49) ein höherer Druck erzeugt. Das entsprechend komprimierte Gas kann dann einer vorgesehenen Verwendung zugeführt werden.

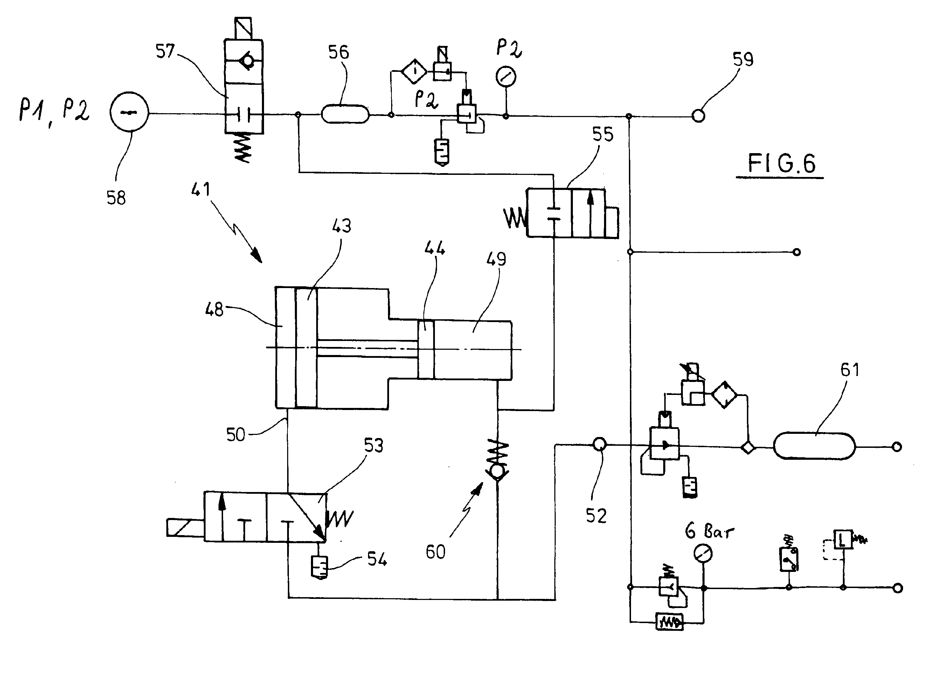

Fig. 6 zeigt die schaltungstechnische Einbindung des Druckwandlers (41) gemäß Figur 5 in die Blasluftversorgung einer in Fig. 6 nicht dargestellten Blasstation (3). Der Einlaß (50) des Druckwandlers (41) ist mit einem Rückführanschluß (52) verbunden, dem verbrauchte Blasluft mindestens einer Blasstation (3) zugeführt wird. Die Verbindung des Einlasses (50) mit dem Rückführanschluß (52) erfolgt über ein Steuerventil (53). Das Steuerventil (53) ist darüber hinaus mit einem Schalldämpfer (54) verbunden, der eine Abführung nicht wieder verwendeter Blasluft in eine Umgebung sowie eine Entlüftung des Primärraumes (48) des Druckwandlers (41) ermöglicht.

Ausgehend von dem in Fig. 6 dargestellten Grundzustand erfolgt in einem ersten Arbeitsschritt ein Durchschalten des Steuerventils (53), um eine Zufuhr von rückgeführter Blasluft in den Bereich des Primärraumes (48) zu ermöglichen. Die Kolben (43, 44) werden hierdurch in der Zeichnungsebene nach rechts verschoben und es erfolgt ein Druckaufbau im Sekundärraum (49). Nach Erreichen eines vorgesehenen Kompressionsdruckes, der typischerweise einem Hauptblasdruck P2 für die Herstellung der Behälter (2) entspricht, erfolgt eine Öffnung eines Ventils (55) und das komprimierte Blasgas wird einem Speicher (56) zugeführt. Der Speicher (56) ist zusätzlich über ein Ventil (57) mit einer Blasdruckversorgung (58) gekoppelt. Die Blasdruckversorgung (58) weist typischerweise eine Drehkupplung auf, um eine Zufuhr des Blasgases von einem stationären Maschinenteil auf das rotierende Blasrad (25) zu ermöglichen.

In Richtung auf einen Übergabeanschluß (59), der für eine Verbindung mit einer oder mehrerer nicht dargestellter Blasstationen (3) vorgesehen ist, sind Druckregler sowie gegebenenfalls Anzeigeelemente angeordnet.

Nach der Durchführung des vorstehend beschriebenen Kompressionsschrittes erfolgt eine Entlüftung des Primärraumes (48) über den Schalldämpfer (54) und der am Rückführanschluß (52) anstehende Druck wird über ein Rückschlagventil (60) zum Sekundärraum (49) übertragen. Die Kolben (43, 44) werden hierdurch in der Zeichnungsebene in die in Figur 6 dargestellte Grundpositionierung zurückgeschoben und der Sekundärraum (49) wird mit Gas gefüllt. Während dieses Prozeßschrittes ist das Ventil (55) geschlossen.

Typischerweise erfolgt unter Verwendung der Blasdruckversorgung (58) eine erste Befüllung des Speichers (56) und die Blasdruckversorgung (58) stellt soviel an Blasgas bereit, wie nicht unter Verwendung des Druckwandlers (41) an rückgeführter Blasluft generiert werden kann.

Alternativ oder ergänzend zu einer Ausstattung der Kolben (43, 44) mit unterschiedlich großen Flächen ist es auch möglich, die Kolben (43, 44) nicht starr miteinander zu koppeln sondern über eine geeignete mechanische Kopplung unterschiedliche Hebellängen oder unterschiedlich lange zu durchlaufende Arbeitswege zu nutzen, um die für die Druckwandlung erforderlichen Kräfte bereitzustellen.

Bei einer Transformation des Druckes der wiederverwendeten Blasluft auf einen Zwischendruck, der unterhalb des maximalen Blasdruckes liegt, wird das Blasverfahren typischerweise derart durchgeführt, daß bei der Behälterexpansion zunächst ein Teilblasschritt unter Verwendung des Zwischendruckes und ein anschließendes Fertigblasen unter Verwendung des maximal vorgesehenen Blasdruckes erfolgt.

Aus Fig. 6 ist zu erkennen, dass im Bereich der dem Druckwandler (41) abgewandten Seite des Rückführanschlusses (42) ein Speicher (61) für rückzuführende Blasluft angeordnet ist. Der Speicher (61) ermöglicht einen Betrieb des Druckwandlers (41) unabhängig von der Taktung der Blasmaschine.

Gemäß einer vereinfachten Betriebsweise wird bei einem Rückhub des Druckwandlers (41) in die in Fig. 6 dargestellte Grundposition der Druck im Primärraum (48) auf einen Umgebungsdruck abgesenkt. Eine verbesserte Nutzung der wieder zu verwendenden Blasluft kann aber dadurch erfolgen, dass der Druck im Primärraum (48) nur auf einen Wert abgesenkt wird, der dem Rückführdruck multipliziert mit dem Reziprokwert zur vom Druckwandler (41) generierten Druckerhöhung entspricht. Dieser Reziprokwert ist deshalb maßgeblich, weil bei einem Rückhub des Druckwandlers (41) eine Druckwandlung in einem umgekehrten Verhältnis wie bei einem verdichtungsschritt erfolgt.

Gemäß einer weiteren alternativen oder ergänzenden Ausführungsform ist es auch möglich, bei einem Rückhub des Druckwandlers (41) die aus dem Primärraum ausströmende Luft teilweise oder vollständig einem oder mehreren Druckwandlern zuzuführen und hierdurch in einer abgestuften Art und Weise die in der Druckluft gespeicherte Energie zu nutzen.

## Patentansprüche

1. Verfahren zur Blasformung von Behältern (2), bei dem ein Vorformling (1) nach einer thermischen Konditionierung innerhalb einer auf einem rotierenden Blasrad (25) angeordneten Blasform (4, 5) einer Blasmaschine durch Blasdruckeinwirkung in den Behälter (2) umgeformt wird sowie bei dem Blasgas von einer Versorgungseinrichtung bereitgestellt wird, und mindestens ein Teil des Blasgases nach der Behälterformung einer Wiederverwendung zugeführt wird, **dadurch gekennzeichnet, dass** mindestens ein Teil des aus dem geblasenen Behälter (2) ausströmenden Blasgases nach der Blasformung auf dem Blasrad (25) einer Drucktransformation derart zugeführt wird, dass der Druck erhöht wird, wobei die Drucktransformation unter Verwendung eines auf dem Blasrad (25) angeordneten Druckwandlers (41) durchgeführt wird, der zwei Kolben (43, 44) mit unterschiedlich großen Kolbenflächen aufweist.

2. Verfahren nach Anspruch 1, **dadurch gekennzeichnet, dass** der Druck auf einen maximalen Blasdruck erhöht wird.

3. Verfahren nach Anspruch 1, **dadurch gekennzeichnet, dass** der Druck auf ein Druckniveau erhöht wird, das zwischen dem Druck des rückgeführten Gases und dem maximalen Blasdruck liegt.

4. Verfahren nach einem der Ansprüche 1 bis 3, **dadurch gekennzeichnet, dass** jeder Blasstation (3) auf dem Blasrad (25) ein separater Druckwandler (41) zugeordnet wird.

5. Verfahren nach einem der Ansprüche 1 bis 3, **dadurch gekennzeichnet, dass** mindestens zwei Blasstationen (3) an einen gemeinsamen Druckwandler (41) angeschlossen werden.

6. Vorrichtung zur Blasformung von Behältern (2), die mindestens eine auf einem rotierenden Blasrad (25) angeordnete Blasstation (3) mit einer Blasform (4, 5) aufweist, sowie bei der die Blasstation (3) mit einer pneumatischen Versorgungseinrichtung verbunden ist, die eine Einrichtung zur Wiederverwendung von Blasgas aufweist, **dadurch gekennzeichnet, dass** die Einrichtung zur Wiederverwendung des Blasgases mindestens einen auf dem Blasrad (25) angeordneten Druckwandler (41) aufweist, der zur Druckerhöhung ausgebildet ist, wobei der Druckwandler (41) zwei Kolben (43, 44) aufweist, die mit unterschiedlichen Kolbenflächen versehen sind.

7. Vorrichtung nach Anspruch 6, **dadurch gekennzeichnet, dass** jede Blasstation (3) mit einem separaten Druckwandler (41) verbunden ist.

8. Vorrichtung nach Anspruch 6, **dadurch gekennzeichnet, dass** mindestens zwei Blasstationen (3) an einem gemeinsamen Druckwandler (41) angeschlossen sind.

## Claims

1. A method for the blow moulding of containers (2), wherein
a preform (1), after having been conditioned thermally, is moulded in a blow mould (4, 5) of a blow moulding machine by the action of blowing pressure to form the container (2) and wherein blowing gas is provided by a supplying device, said blow mould (4, 5) being arranged on a rotating blow moulding wheel (25), and wherein at least a part of the blowing gas is supplied to a recycling operation after the container has been moulded,
**characterised in that**
- after blow moulding has been completed on the blow moulding wheel (25), at least a part of the blowing gas that is flowing out of the blow-moulded container (2) is supplied to a pressure transformation such that the pressure is increased, wherein the pressure transformation is accomplished using a pressure transducer (41) arranged on the blow moulding wheel (25), said pressure transducer (41) comprising two pistons (43, 44) having piston areas differing in size.

2. The method according to Claim 1, **characterised in that** the pressure is increased to a maximum blowing pressure.

3. The method according to Claim 1, **characterised in that** the pressure is increased to a pressure level that is between the pressure of the returned gas and the maximum blowing pressure.

4. The method according to any one of Claims 1 to 3, **characterised in that** a separate pressure transducer (41) is assigned to each blowing station (3) on the blow moulding wheel (25).

5. The method according to any one of Claims 1 to 3, **characterised in that** at least two blowing stations (3) are connected to a common pressure transducer (41).

6. A device for the blow moulding of containers (2), comprising at least one blowing station (3) arranged on a rotating blow moulding wheel (25) and having a blow mould (4, 5), and wherein the blowing station (3) is connected to a pneumatic supplying device which comprises a device for recycling blowing gas, **characterised in that** the device for recycling the blowing gas comprises at least one pressure transducer (41) that is arranged on the blow moulding wheel (25) and is formed to increase the pressure, wherein the pressure transducer (41) comprises two pistons (43, 44) which are provided with different piston areas.

7. The device according to Claim 6, **characterised in that** each blowing station (3) is connected to a separate pressure transducer (41).

8. The device according to Claim 6, **characterised in that** at least two blowing stations (3) are connected to a common pressure transducer (41).

## Revendications

1. Procédé de moulage par soufflage de récipients (2) dans le cadre duquel une préforme (1), après un conditionnement thermique à l'intérieur d'un moule de soufflage (4, 5) d'une machine de moulage par soufflage agencé sur une roue de soufflage (25) en rotation, est transformée en un récipient (2) sous l'action d'une pression de soufflage, et pour lequel du gaz de soufflage est mis à disposition par un dispositif d'alimentation et, après que le récipient soit formé, une partie au moins du gaz de soufflage est récupérée en vue d'une réutilisation, **caractérisé en ce qu'**une partie au moins du gaz de soufflage s'échappant du récipient formé (2) après le moulage par soufflage sur la roue de soufflage (25) est conduite vers un dispositif de transformation de pression de façon telle que la pression est accrue, la transformation de pression étant réalisée au moyen d'un convertisseur de pression (41) placé sur la roue de soufflage (25) et muni de deux pistons (43, 44) dont les surfaces diffèrent.

2. Procédé selon la revendication 1, **caractérisé en ce que** la pression est augmentée jusqu'à atteinte d'une pression de soufflage maximale.

3. Procédé selon la revendication 1, **caractérisé en ce que** la pression est augmentée jusqu'à un niveau compris entre la pression du gaz récupéré et la pression de soufflage maximale.

4. Procédé selon l'une des revendications 1 à 3, **caractérisé en ce qu'**un convertisseur de pression (41) séparé est affecté à chacune des stations de soufflage (3) sur la roue de soufflage (25).

5. Procédé selon l'une des revendications 1 à 3, **caractérisé en ce que** deux stations de soufflage (3) au moins sont branchées sur un convertisseur de pression (41) commun.

6. Dispositif de moulage par soufflage de récipients (2) présentant au moins une station de soufflage (3) avec un moule de soufflage (4, 5) agencée sur une roue de soufflage (25) et reliée à une alimentation pneumatique, et présentant un dispositif de réutilisation du gaz de soufflage, **caractérisé en ce que** le dispositif de réutilisation du gaz de soufflage présente au moins un convertisseur de pression (41) agencé sur la roue de soufflage (25) et conçu pour augmenter la pression, ce convertisseur de pression (41) présentant deux pistons (43, 44) dotés de surfaces différences.

7. Dispositif selon la revendication 6, **caractérisé en ce que** chaque station de soufflage (3) est reliée à un convertisseur de pression (41) séparé.

8. Dispositif selon la revendication 6, **caractérisé en ce que** deux stations de soufflage (3) au moins sont branchées sur un convertisseur de pression (41) commun.
